## Europäisches Patentamt
## European Patent Office
## Office européen des brevets

(11) Publication number: **0 099 232**
**A2**

(12) **EUROPEAN PATENT APPLICATION**

(21) Application number: **83303921.7**

(22) Date of filing: **05.07.83**

(51) Int. Cl.³: **H 02 M 7/537**
**H 02 P 13/20**

(30) Priority: **06.07.82 US 395196**

(43) Date of publication of application:
**25.01.84 Bulletin 84/4**

(84) Designated Contracting States:
**DE FR GB IT NL**

(71) Applicant: **TEXAS INSTRUMENTS INCORPORATED**
**13500 North Central Expressway**
**Dallas Texas 75265(US)**

(72) Inventor: **Mosher, Dan M.**
**4420 Denver Drive**
**Plano Texas 75075(US)**

(74) Representative: **Abbott, David John et al,**
**Abel & Imray Northumberland House 303-306 High**
**Holborn**
**London, WC1V 7LH(GB)**

(54) **Burst length modulation for switching power supplies.**

(57) The present invention synthesizes an approximation to a 60 Hz sine wave using a plurality of bursts of high frequency square waves. The number of square wave cycles in each burst is modulated to achieve a good approximation to a sine wave. This bipolar burst train is then separated into two complementary unipolar burst trains, which are fed to power transistors to modulate current at the primary of a transformer. Since the transformer is not required to withstand saturation over a full half cycle at 60 Hz, but only over a half cycle at the square wave frequency, the transformer weight can be greatly reduced, as can the number of primary turns. Two secondary windings are used, each coupled to a single output stage, and an npn/pnp pair of transistors, controlled by the 60 Hz reference, provides polarity switching to restore full-cycle ac output power.

Fig. 1

BURST LENGTH MODULATION FOR SWITCHING POWER SUPPLIES


BACKGROUND OF THE INVENTION

The present invention relates to switching power supplies.

A need often exists to operate equipment which requires alternating current power (e.g. 120 VAC) where there are no utility power lines or other source of such power. Frequently, there is a source of direct current electric power (e.g. a 12 VDC storage battery) available. This invention converts such low voltage direct current electric power to a standard alternating current power. It is believed that this inverter's cost/performance ratio is better than existing designs.

Many inverters have been designed to solve the problem discussed above. They can be classified into several basic designs, each of which has the characteristics noted:

A) Oscillator followed by power amplifier
   1) excellent signal quality
   2) excellent transient response
   3) simple signal circuitry
   4) very heavy and physically large transformer
   5) very poor efficiency
   6) very expensive

B) Squarewave switcher without filter
   1) very poor signal quality
   2) very poor transient response
   3) very simple circuitry
   4) heavy and large transformer
   5) good efficiency
   6) quite inexpensive

C) Ferroresonant
   1) excellent signal quality
   2) good transient response
   3) very simple circuitry
   4) heavy and large transformer

-2-

5) good efficiency

6) fairly inexpensive

D) Step-wave Synthesis

1) very good signal quality

2) very good transient response

3) complex circuitry

4) no transformer, must be supplied with a DC voltage higher than peak of AC wave

5) very good efficiency

6) fairly inexpensive

E) Pulse width modulation

1) very good signal quality

2) very good transient response

3) very complex circuitry

4) heavy and large transformer

5) good efficiency

6) expensive

A good review of these design approaches is given in "Which dc/ac inverter" by George O'Sullivan, Electronic Design, 6 Dec. 1974, which is hereby incorporated by reference.

Thus, it is an object of the present invention to provide an inverter which gives excellent output signal quality.

It is a further object of the present invention to provide an inverter which has excellent transient response.

It is a further object of the present invention to provide an inverter which has reasonably simple, and preferably integrable, signal circuitry.

It is a further object of the present invention to provide an inverter which requires only a very small and inexpensive transformer.

It is a further object of the present invention to provide an inverter which has good efficiency.

It is a further object of the present invention to provide an inverter which is inexpensive.

# 0099232

## SUMMARY OF THE INVENTION

The present invention synthesizes an approximation to a 60 Hz sine wave using a plurality of bursts of high frequency square waves. The number of square wave cycles in each burst is modulated to achieve a good approximation to a sine wave. This bipolar burst train is then separated into two complementary unipolar burst trains, which are fed to power transistors to modulate current at the primary of a transformer. Since the transformer is not required to withstand saturation over a full half cycle at 60 Hz, but only over a half cycle at the square wave frequency, the transformer weight can be greatly reduced, as can the number of primary turns. Two secondary windings are used, each coupled to a single output stage, and an npn/pnp pair of transistors, controlled by the 60 Hz reference, provides polarity switching to restore full-cycle ac output power.

According to the present invention, there is provided: an inverter, for converting dc input power into ac output power at a frequency and voltage in conformity with an ac reference input signal, said inverter comprising: oscillator means for generating high-frequency square waves; first comparator means, comprising respective inputs connected to the output terminal and to the reference voltage signal, and comprising an output connected to said oscillator means, for selectively actuating said oscillator means, for actuating said oscillator means whenever the instantaneous voltage at said output terminal is less than the instantaneous voltage of the reference voltage signal; a transformer, said transformer comprising primary and secondary windings, said primary windings of said transformer being operatively connected to be driven by the output of said oscillator means, and said secondary windings of said transformer being operatively connected to drive said output terminal.

-4-

BRIEF DESCRIPTION OF THE DRAWINGS

The present invention will be described with reference to the accompanying drawings, wherein:

Figure 1 schematically shows the approximation of a 60 Hz sine wave by length-modulated bursts of square waves;

Figure 2 shows a schematic of a first embodiment of the invention, wherein a dc input is converted to a 60 Hz 120 volt output; and

Figure 3 shows a specific implementation of the presently preferred embodiment.

DESCRIPTION OF THE PREFERRED EMBODIMENTS

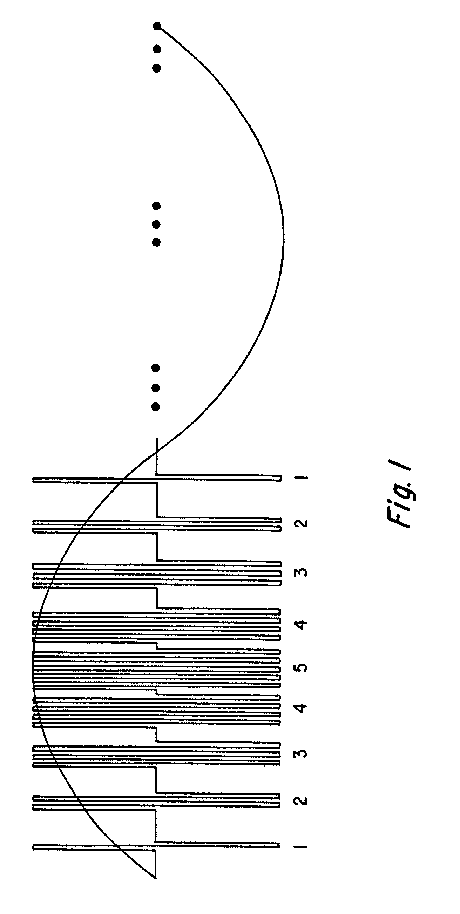

The waveform of Figure 1 shows the basic approximation scheme which is used to approximate the desired 60 Hz sine wave by means of a selectively interrupted high-frequency square wave. Note that the high-frequency square wave is bipolar. That is, if load factor is equal, the pulse train in the second $180^{\circ}$ of a 60 Hz cycle would be exactly the same as the high-frequency pulse train in the first half of the 60 Hz cycle, so that output switching is required to produce a smooth 60 Hz sine wave rather than a full-wave-rectified version thereof.

The operation of the present invention in specific embodiments will first be described in detail, and then alternative embodiments and modifications and generalizations of the present invention will be discussed.

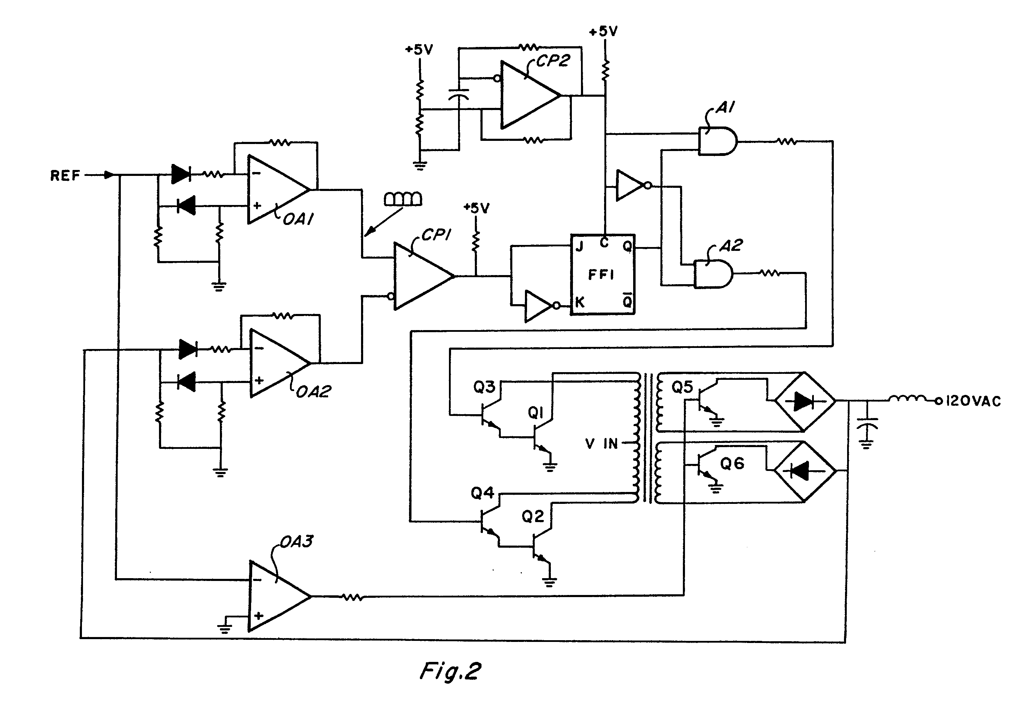

Figure 2 shows a circuit diagram of a first embodiment of the invention. Comparator cp 2 generates a high frequency square wave, at a frequency which, in this embodiment, is approximately eight kilohertz. Comparator cp 1 compares the output of the inverter with the 60 Hz reference signal, to ascertain whether more energy is to be supplied instantaneously to the primary of the transformer T1. Note that the two waveforms are compared in a full-wave-rectified equivalent version. If more energy is needed, flip flop FF1 assures that complete, symmetrical square waves are produced by the logic outputs of AND gates A1 and A2. The outputs of these gates control driver transistors $Q_3$ and $Q_4$. These drive transistors obtain their collector current from separate respective transformer taps, each of which is about three volts from the main power switch tap (i.e. from the collector of $Q_1$ or $Q2$ respectively). This innovation uses the drive current of driver transistors $Q_3$ and $Q_4$ to add ampere-turns to the primary of the transformer, so that most of the driver transistor's energy is not a loss to the system. Each driver $Q_3$ or $Q_4$ drives a respective

output stage $Q_1$ or $Q_2$, to drive current in the corresponding one of two opposite senses through the primary of transformer T1. If $Q_1$ starts to desaturate, the collector voltage of $Q_1$ rises, and therefore the drain voltage of $Q_3$ rises, and therefore increased drive is provided to $Q_1$, maintaining it in saturation.

Although the driver transistors are shown as bipolars in Figure 2, the presently preferred embodiment uses MOS driver transistors for $Q_3$ and $Q_4$. These have the advantage that less load is presented to the logic circuits, and better switching efficiency is achieved. The output transistors $Q_1$ and $Q_2$ are still preferably configured as bipolars, since the necessary current-handling capability is cheaper with bipolar transistors. Transformer T1, in the presently preferred embodiment, has a tape-wound nickel-iron core. In the presently preferred embodiment, the dc input voltage $V_n$ is approximately equal to twenty volts. If a higher input voltage is used, lower ohmic losses in the primary of transformer T1 result, since fewer amperes into the primary are required for a given output power and turns ratio.

Transformer T1 transforms its input power into two secondaries, which produce respective waveforms of opposite polarity. That is, the output of each secondary S1 or S2 is full-wave rectified by a corresponding bridge circuit R1 or R2. Full-wave rectifier $R_1$ is connected to provide only positive waveforms at the output terminal OT, and full-wave rectifier $R_2$ is connected to provide only negative waveforms at the output terminal OT. However, transistors $Q_5$ and $Q_6$ are connected, through op amp OA3, to the 60 Hz reference input, so that only one of the secondaries S1 or S2 with its corresponding rectifier $R_1$ or $R_2$ is connected to the output. Thus, in accordance with the particular half-cycle in which the reference waveform is found, the bipolar pulses which are passed through transformer T1 are switched and rectified to produce the appropriate half-cycle phase at the output. Choke L1 and capacitor C1 provide a simple output filter, to remove components above 60 Hz from the output. Of course, if better output filtering is desired, a more complex output filter may be used, although somewhat greater losses may be incurred.

An output polarity switching circuit, which has a function roughly analogous to that performed by Q5 and Q6, has been realized in the prior art by means of an SCR bridge. However, such an SCR bridge has the disadvantage of requiring a triggering transformer, and usually also a turn-off transformer. By contrast, the output pluarity switching circuit of Q5 and Q6 is much simpler, and is quite efficient. While some zero-crossing distortion will be caused by the saturation voltages of transistors Q5 and Q6, this plays only a small factor in the efficiency of the circuit.

If desired, MOS or other field effect transistors can of course be used for primary drive, output switching, or both. If MOS primary drivers are used, the time constant of the RC circuit connected to comparator CP2 can be reduced in value, so that a higher frequency square wave is provided. For example, the present invention can thus be embodied with a square wave frequency of 100 kilohertz or higher, using MOSFET drivers and a ferrite core transformer as the transformer T1. Such a high frequency provides better output waveform quality at slightly greater cost.

A particular advantage of the present invention is that the circuit indicated in Figure 2 is immediately responsive to changes in output load. That is, whenever the energy provided at the output is even instantaneously deficient, this is indicated at the output of comparator CP1. For as long as this condition exists, flip flop FF1 continues to supply additional energy to the primary of transformer T1, until adequate voltage is restored at the output. It is, of course, necessary that the turns ratio of transformer T1 be such that the peak output voltage at the output of rectifier R1 or R2 be at least 170 volts, after ohmic losses, junction losses, and switching losses. That is, the dc input voltage $V_n$ times the turn ratio of transformer T1 must be greater than 170 volts.

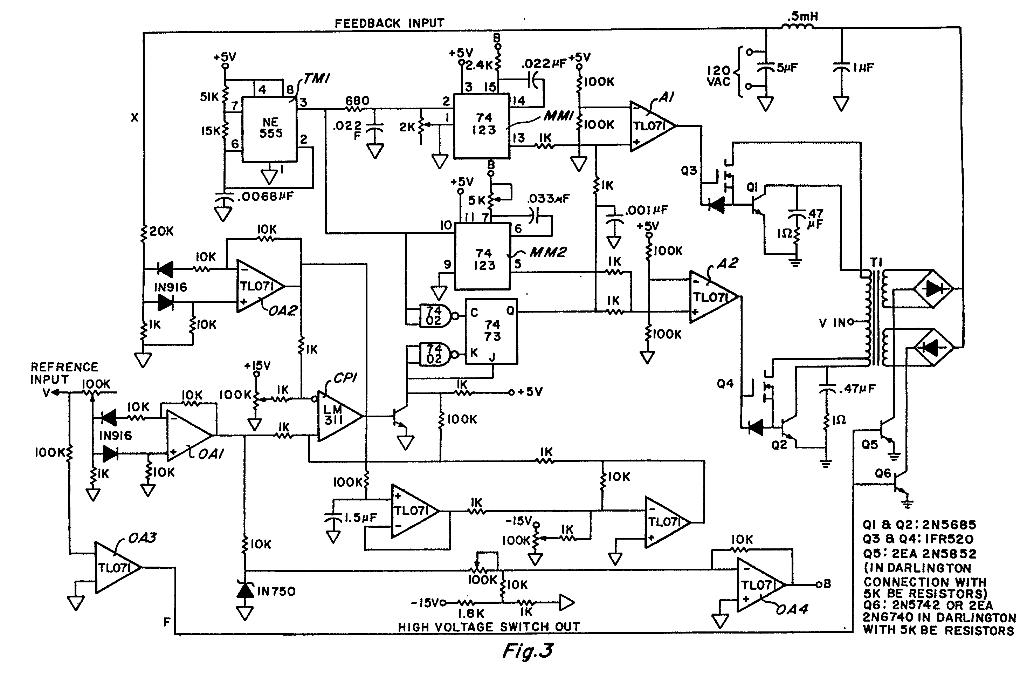

Figure 3 shows circuit details of the presently preferred embodiment of the invention. Note that several substitutions have been made in the circuit of Figure 2, and one additional element of functional novelty has been added. First, note that comparator CP2 has been configured as a timer TM1 followed by two one-shots (monostable multivibrators) MM1 and MM2. Moreover, the AND gates A1 and A2 have been realized, in this embodiment, by means of comparators.

In addition, op amp OA4 has now been incorporated. This op amp, which is connected to the multivibrators MM1 and MM2, serves the additional novel function of modulating the pulsed width of the square wave output, in accordance with the instantaneous value of the reference voltage. Note that this additional modulation step is not controlled by any feedback from the output, but is simply referenced directly to the reference input. This additional modulation provides slightly better output signal quality.

It will be recognized by those skilled in the art that the preferred embodiment, as discussed above, may not only be modified and elaborated in many ways, but also may be simplified. For example, the present invention is directly applicable to effect dc-to-dc conversion as well. In this case, only a single secondary would be provided on the transformer T1, and the output of that secondary would be directly full-wave rectified and filtered to provide the output. The filtered output voltage would then be provided as the feedback to op amp OA2 and thus to comparator CP1.

A further application of the present invention is in an AC-to-AC converter. For example, where it is desired to convert 60 Hz power to 400 Hz power, or vice versa, this readily accomplished by providing a full-wave rectified and filtered signal to the $V_{in}$ connection, and providing a reference signal, at the desired output voltage and frequency, to the reference voltage input.

The ac reference voltage input may be provided by, e.g., a divided-down crystal oscillator followed by a sharp cutoff low-pass filter, or may, as in the presently preferred embodiment, when it is desired to feed power into an active ac power bus, simply be provided with the signal already existing on the power bus.

Moreover, although the present invention has been described primarily in terms of approximating a low-frequency sine wave, the exact same circuit may also be used to approximate any desired waveform, such as a triangle or square wave.

In particular, a very important area of application of the present invention is in motor control. That is, using the simple circuit and light weight transformer used in the present invention, an ac motor may be economically controlled using a low-voltage dc input. This is highly desirable, not only in low-power motors for automotive supplies, but in a variety of other mobil and industrial motor control applications. It is particularly desirable, in many of these applications, to be able to use synchronous motors or pancake motors. The present invention is the first way to make motor control in many such systems economical.

It is also possible to use bipolar primary modulation without burst-length modulation, e.g. in a pulse-width modulation system. That is, instead of a unipolar pulse of varied width, a square wave of varied duration is used, where the total energy of the two halves of the square wave provides the desired local approximation to an analog sine wave, and the two equal polarities of the square wave provide balanced transformer drive.

Conversely, it is also possible to implement burst-length modulation, according to the present invention, without the feature of bipolar input to the transformer primary. This provides the crucial advantage that the spurious output energy (e.g. output energy at frequencies above 120 Hz) is typically much less than would be encountered in a pulse-width modulation system. However, the exact degree of advantage provided by this embodiment of the present invention is dependent on the frequency of the pulse switching used.

-10-

However, both of these embodiments are less preferable than the family of preferred embodiments, which use, as discussed above, both burst-length modulation and bipolar input to the primary of the main transformer.

As will be obvious to those skilled in the art, the present invention may be embodied in a wide variety of variations and equivalents, and the scope of the present invention is not limited except as in the accompanying claims.

CLAIMS


1.  An inverter, for converting dc input power into ac output power at a frequency and voltage in conformity with an ac reference input signal, said inverter comprising:

oscillator means for generating high-frequency square waves;

first comparator means, comprising respective inputs connected to the output terminal and to the reference voltage signal, and comprising an output connected to said oscillator means, for selectively actuating said oscillator means, for actuating said oscillator means whenever the instantaneous voltage at said output terminal is less than the instantaneous voltage of the reference voltage signal;

a transformer, said transformer comprising primary and secondary windings, said primary windings of said transformer being operatively connected to be driven by the output of said oscillator means, and said secondary windings of said transformer being operatively connected to drive said output terminal.


2.  The inverter of Claim 1, wherein said oscillator provides as output first and second square waves, said first and second square waves being opposite in sign and 180° out of phase, said first and second square waves being provided as first and second outputs of said oscillator means.


3.  The inverter of Claim 2, wherein said primary winding of said transformer comprises a center tap connected to the dc power input, and wherein said first and second outputs of said oscillator are operatively connected to switch respective halves of said primary winding to ground.

-12-

4. The inverter of Claim 3, wherein each said respective oscillator output is connected to a respective transistor pair, and wherein each said respective transistor pair is connected to switch a half-winding of said primary winding to ground.

5. The inverter of Claim 4, wherein each said respective transistor pair comprises first and second collector terminals, both said first and said second respective collector terminals being connected to separate points on said respective primary winding of said transformer.

6. The inverter of Claim 4, wherein each said respective transistor pair comprises a driver transistor and an output transistor, said driver transistor being connected to receive said oscillator output and having a first terminal connected to said primary winding of said transformer and also having a second terminal, said output transistor being bibolar and comprising a collector terminal connected to said primary winding of said transformer separately from said first terminal of said driver transistor, said output transistor also comprising a gate terminal connected to said second terminal of said driver transistor, and said output transistor also comprising an emitter connected to ground.

7. The inverter of Claim 1, further comprising:
frequency modulation means, said frequency modulation means being connected to said oscillator means and to said ac reference input signal, for varying the frequency of said square waves produced by said oscillator means in accordance with the instantaneous value of said reference input signal.

8. The invertor of Claim 1, wherein said oscillator means generates high-frequency square waves at a frequency which is greater than 10 kilohertz, and wherein said transformer comprises a ferrite core.

0099232

-13-

9. The inverter of Claim 3, 4, 5, 7, or 8 wherein said transformer comprises a first secondary winding and a second secondary winding,

each said respective secondary winding being connected to a respective full-wave bridge,

and further comprising first and second respective output switching means for selectively actuating said first full-wave rectifier or said second full-wave rectifier respectively, in accordance with the phase of said reference signal,

whereby the polarity of the instantaneous voltage at said output terminal is matched to the polarity of the instantaneous voltage of said reference signal.

10. The inverter of Claim 6, wherein said first and second output switching means comprise a pnp transistor and an npn transistor respectively, each having a base operatively connected to said reference signal.

11. The inverter of Claim 1, 2, 3, 4, 5, 6, 7, or 8, further comprising:

motor control signal generation means, said motor control signal generation means being connected to provide said ac reference signal;

whereby said inverter provides a motor control output.

12. An inverter, comprising:

a transformer;

means for providing bursts of bipolar square waves to the primary of said transformer;

means for continuously adjusting the length of said bursts of square waves, in accordance with the instantaneous voltage of a reference signal; and

means, connected to the secondary of said transformer and to an output terminal, for polarity-switching the voltage provided at the secondary of said transformer, in accordance with the instantaneous voltage of said reference signal.

Fig. I

0099232

Fig.2

2/3

0099232

Fig.3